# EUROPÄISCHE PATENTSCHRIFT

(11) **EP 2 373 401 B1**
(45) Veröffentlichungstag und Bekanntmachung des Hinweises auf die Patenterteilung: **19.06.2013**
(21) Anmeldenummer: 09777855.9
(22) Anmeldetag: 13.08.2009
(51) Int. Cl.: F01K 13/00, F22B 37/00, B01D 53/14

(54) **EMISSIONSFREIES KRAFTWERK**
ZERO-EMISSION POWER PLANT
CENTRALE ÉLECTRIQUE À ZÉRO ÉMISSION

(30) Priorität: 25.08.2008 DE 102008039449
(43) Veröffentlichungstag der Anmeldung: 12.10.2011
(73) Patentinhaber: RWTH Aachen, 52056 Aachen (DE)
(72) Erfinder: DE DONCKER, Rik, B-3000 Leuven (BE)
(74) Vertreter: Jostarndt, Hans-Dieter
(86) Internationale Anmeldenummer: PCT/EP2009/005872
(87) Internationale Veröffentlichungsnummer: WO 2010/025813

(56) Entgegenhaltungen:
- EP-A1- 1 517 021
- WO-A1-2006/107209
- GB-A- 2 111 602
- US-A- 4 942 734
- US-B1- 6 169 332
- BDEW BUNDESVERBAND DER ENERGIE- UND WASSERWIRTSCHAFT E.V.: "Technische Richtlinie Erzeugungsanlagen am Mittelspannungsnetz", 20080601, 1. Juni 2008 (2008-06-01), Seiten 1-12, XP007919141, [gefunden am 2011-07-01]
- VARTANIAN C: "Grid stability battery systems for renewable energy success", ENERGY CONVERSION CONGRESS AND EXPOSITION (ECCE), 2010 IEEE, IEEE, PISCATAWAY, NJ, USA, 12. September 2010 (2010-09-12), Seiten 132-135, XP031787271, ISBN: 978-1-4244-5286-6

## Beschreibung

### Technisches Gebiet

Die Erfindung betrifft ein Kraftwerk, bei dem aus fossilem Brennstoff Elektrizität erzeugt wird, wobei die Kohlendioxidemissionen des Kraftwerkes reduziert sind. Insbesondere betrifft die Erfindung ein Kraftwerk nach Anspruch 1. Weiterhin betrifft die Erfindung ein Energieversorgungssystem, in welchem eine Mehrzahl von erfindungsgemäßen Kraftwerken über ein Stromversorgungsnetz miteinander verbunden ist.

### Hintergrund der Erfindung

Eine der Ursachen für die in den letzten Jahren vermehrt zu beobachtenden klimatischen Veränderungen wird in der Emission von so genannten Treibhausgasen gesehen. Zu der Gruppe der Treibhausgase gehört Kohlendioxid (CO₂). Aus dieser Erkenntnis heraus haben viele Nationen das Kyoto-Protokoll ratifiziert, welches im Jahr 2005 in Kraft getreten ist. In diesem Protokoll haben sich viele Industrienationen zu einer schrittweisen Reduzierung ihrer CO₂-Emissionen verpflichtet. Ein wesentlicher Ansatzpunkt, um diese Ziele zu erreichen, ist die Reduzierung der CO₂-Emission bei der Stromerzeugung. Zu diesem umweltpolitischen Ziel tritt ein handfestes wirtschaftliches Interesse, denn für CO₂-Emissionen benötigt der Emittent entsprechende Zertifikate, deren Kosten in Zukunft ansteigen werden.

In diesem Umfeld wächst zum einen das Interesse an der Stromerzeugung aus erneuerbaren Energien und zum anderen das Interesse, die CO₂-Emissionen von Kraftwerken, in denen fossile Energieträger verfeuert werden, zu reduzieren oder im besten Fall ganz zu unterbinden.

In Kraftwerken auf Basis von fossilen Energieträgern, wie zum Beispiel Kohle, werden die Abgase bereits von Mineralien und Staubpartikeln mit elektrostatischen Filtern gereinigt. Um das Kohlendioxid einzufangen, wird aus den gereinigten Abgasen das CO₂ abgeschieden und mit einem Kompressor verdichtet, wobei das Kohlendioxid zum Zweck der Speicherung oder des Transportes verflüssigt wird. Im Stand der Technik wird hierzu vorgeschlagen, den Kompressor mit einer Hilfsturbine anzutreiben, die mit Dampf versorgt wird, welcher von der Hauptturbine des Kraftwerkes abgezweigt wird. Nicht nur der Energiebedarf der Hilfsturbine senkt die Gesamteffizienz des Kraftwerkes, sondern schon allein durch die Tatsache, dass der Dampfstrom zu der Hauptturbine geändert wird und die Ventilregelung zur Leistungssteuerung der Hilfsturbine Verluste verursacht, wird die Effizienz des Kraftwerkes reduziert. Als eine Abschätzung kann gelten, dass 12% der Leistung des Kraftwerkes bei diesem Ansatz verloren gehen. Der Grund dafür ist, dass eine Dampfturbine so optimiert ist, dass sie bei ihrer Nennleistung mit einer festgelegten Drehzahl und einer festgelegten Frequenz und Spannung des Generators die höchstmögliche Effizienz aufweist. Abweichungen von diesen optimalen Nennwerteinstellungen reduzieren den Wirkungsgrad der Hauptturbine. Die Effizienz der Hauptturbine wird weiterhin vermindert, weil alle Neben- und Hilfsaggregate mit ihrer Nennleistung weiterlaufen, die für eine höhere Leistung der Hauptturbine ausgelegt sind. Bei der Auslegung der Nebenaggregate ist nämlich die Leistungsminderung der Hauptturbine durch den Anschluss der Hilfsturbine nicht berücksichtigt. In der Regel bedeutet das, dass die Neben- und Hilfsaggregate mehr Energie verbrauchen als eigentlich notwendig wäre. Dies zusammengenommen führt zu einer Abschätzung, wonach bei der CO₂-Verflüssigung mithilfe eines Kompressors, der von einer Hilfsturbine angetrieben wird, ungefähr 12% der Leistung der Hauptturbine verbraucht werden. Ein solcher Ansatz ist zum Beispiel aus der EP 0 551 876 B1 bekannt.

Darüber hinaus erfordert die Ableitung von überkritischem Dampf aus der Hauptturbine konstruktive Maßnahmen, die teuer und schwer durchzuführen sind. Aus diesen Gründen ist die Nachrüstung von schon bestehenden Kraftwerken mit diesem Konzept nicht praktikabel.

Ein weiterer Aspekt der bekannten Kraftwerke ist, dass diese großen Einheiten nicht schnell starten können und nicht in der Lage sind, einen Schwarzstart durchzuführen, weil keine Energiespeicher zur Verfügung stehen, um die Hilfs- und Nebenaggregate wie Pumpen, Steuerungen und Gebläse mit Energie zu versorgen. Unter Schwarzstart versteht der Fachmann, dass ein Kraftwerk in der Lage ist, aus dem Stillstand heraus anzufahren, ohne hierfür Energie aus einem Stromversorgungsnetz zu benötigen. Außerdem ist ein Inselbetrieb nicht möglich, weil eine Frequenzregelung nicht für jedes Kraftwerk zur Verfügung steht. Eine Regelung mit der primären Leistung, mit dem Ziel, eine geringere Leistung abzugeben, ist sehr ineffizient, weil der Dampfkessel unter vollem Dampfdruck gehalten werden muss, so dass die Leistung schnell hochgefahren werden kann, wenn eine Leistungsschwankung auftritt.

Hiervon ausgehend besteht ein Bedarf für Kraftwerke, die fossile Brennstoffe als Primärenergieträger verbrennen, die aber weniger CO₂ als herkömmliche Kraftwerke in die Atmosphäre ausstoßen, insbesondere im Teillastbetrieb. Im Idealfall sollte ein Kraftwerk trotz des Einsatzes von fossilen Energieträgern kein CO₂ in die Atmosphäre entweichen lassen. In diesem Fall spricht man auch von einem Nullemissionskraftwerk oder einem emissionsfreien Kraftwerk, obschon andere Verbrennungsgase als CO₂ wie zum Beispiel Stickoxide (NOx) weiterhin in die Atmosphäre entweichen.

WO 2006/107209 A1 offenbart ein Verfahren zur Erzeugung elektrischer Energie im wesentlich basierend auf der Verbrennung von Kohle. Das Verbrennungsgas wird im Rahmen dieses Verfahrens mittels einer CO₂-Auffanganlage in einen CO₂-armen und einen CO₂-reichen Anteil aufgeteilt. Die CO₂-Auffanganlage besteht aus einem Kompressor, der durch einen Motor angetrieben wird.

### Kurze Darstellung der Erfindung

Zur Lösung dieser Aufgabe schlägt die Erfindung ein Kraftwerk vor, bei dem ein fossiler Brennstoff zur Stromerzeugung eingesetzt wird. Eine Turbine treibt einen Generator an, der elektrischen Strom erzeugt. Das Kraftwerk weist eine Abscheideeinrichtung auf, mit welcher Kohlendioxid aus dem Abgas des Kraftwerkes abgeschieden wird. Das Kraftwerk weist weiterhin einen Kompressor auf, mit welchem das abgeschiedene Kohlendioxid verflüssigt wird. Die Erfindung zeichnet sich dadurch aus, dass der Kompressor mit einem elektrischen Antrieb gekoppelt ist. Des Weiteren ist ein Umrichter an das Wechselspannungs-Mittelspannungsnetz angeschlossen, um Gleichstrom zu erzeugen, der von einem Inverter in eine Wechselspannung umgewandelt wird, um den elektrischen Antrieb des Kompressors mit Energie zu versorgen. Der Umrichter und der Inverter sind über ein Gleichstrom-Mittelspannungsnetz miteinander verbunden. In dieses Gleichstrom-Mittelspannungsnetz lassen sich mit relativ geringem Aufwand regenerative Energiequellen und elektrische Energiespeicher integrieren. Bei den regenerativen Energiequellen kommen insbesondere Windparks in Frage. Der Umrichter kann ein aktiver Gleichrichter sein, der auch Blindleistung (Grundschwingungsblindleistung und harmonische) kompensieren kann.
Ein Vorteil des erfindungsgemäßen Kraftwerkes ist, dass weniger Primärenergie verbraucht wird, um das Kohlendioxid aus den Abgasen abzuscheiden und zu verflüssigen als bei Anlagen, wie sie aus dem Stand der Technik bekannt sind.

Bei einem Ausführungsbeispiel der Erfindung kann die Turbine eine Dampfturbine sein, wobei das Kraftwerk einen Kessel umfasst, in welchem der fossile Brennstoff verbrannt wird, um Dampf für die Turbine zu erzeugen, die den Generator antreibt.

Bei einer zweckmäßigen Ausführungsform der Erfindung gibt der Generator den erzeugten elektrischen Strom an ein Wechselspannungs-Mittelspannungsnetz ab. In diesem Fall ist es vorteilhaft, wenn der elektrische Antrieb des Kompressors zur Versorgung mit elektrischer Energie an das Wechselspannungs-Mittelspannungsnetz angeschlossen ist.

Mit Vorteil lässt der elektrische Antrieb des Kompressors variable Drehzahlen zu, was sich günstig auf dem Wirkungsgrad des Kraftwerkes auswirkt, weil der Kompressor auf diese Weise effizient an den tatsächlichen Betriebszustand des Kraftwerkes anpassbar ist.

Vorteilhafterweise kann an das Gleichstrom-Mittelspannungsnetz ein weiterer Inverter angeschlossen sein, der elektrische Nebenaggregate des Kraftwerkes mit Energie versorgt. In diesem Fall ist es besonders vorteilhaft, wenn die Nebenaggregate elektrische Antriebe mit variabler Drehzahl aufweisen, denn so können weitere Effizienzvorteile hinsichtlich des Eigenenergiebedarfs des Kraftwerkes realisiert werden, insbesondere im Teillastbereich.

Bei einem weiteren vorteilhaften Ausführungsbeispiel der Erfindung ist das Kraftwerk mit einem elektrischen Energiespeicher verbunden. Der Energiespeicher kann kurzfristige Schwankungen des Energiebedarfs in einem Versorgungsnetz schnell ausgleichen und verleiht dem Kraftwerk darüber hinaus Schwarzstartfähigkeiten.

Es hat sich als zweckmäßig erwiesen, wenn der Energiespeicher aus einer elektrischen Batterie oder aus einer Mehrzahl von miteinander verbundenen elektrischen Batterien aufgebaut ist. Hierfür kommen unter anderem Bleibatterien in Frage, die kostengünstig und langlebig sind.

Der Energiespeicher kann sowohl innerhalb als auch außerhalb des Kraftwerkes aufgestellt sein. Dabei ist es auch möglich, dass ein einzelner Energiespeicher als Energiespeicher für mehrere Kraftwerke dient. Grundsätzlich sind hierbei auch Mischformen möglich, so dass eine große Flexibilität bei der Gestaltung des Energiespeichers vorhanden ist, um ihn an die jeweils herrschenden Bedingungen anpassen zu können.

Es hat sich als vorteilhaft erwiesen, wenn der Energiespeicher an das Gleichstrom Mittelspannungsnetz des Kraftwerkes angeschlossen ist.

Um die Betriebsspannung des Energiespeichers an die Betriebsspannung des Gleichstrom Mittelspannungsnetzes anzupassen, ist es zweckmäßig, wenn der Energiespeicher über einen Gleichspannungswandler an das Gleichstrom/Mittelspannungsnetz des Kraftwerkes angeschlossen ist.

Bei einem Ausführungsbeispiel des erfindungsgemäßen Kraftwerkes ist eine Windkraftanlage an das Gleichstrom-Mittelspannungsnetz angeschlossen. Auf diese Weise ist es besonders einfach möglich, die schwankende Energieabgabe eines Windkraftwerkes in ein Elektrizitätsversorgungsnetz zu integrieren.

Gemäß einem zweiten Aspekt der Erfindung wird ein Energieversorgungssystem aus einer Anzahl von erfindungsgemäßen Kraftwerken vorgeschlagen, die in einem Stromversorgungsnetz miteinander verbunden sind. Dabei ist es vorgesehen, dass mehrere der Kraftwerke jeweils einen Energiespeicher aufweisen. Ein Vorteil des erfindungsgemäßen Energieversorgungssystems ist, dass Lastschwankungen in dem Stromversorgungsnetz aus den Energiespeichern ausgeglichen werden können, ohne dass ein Kraftwerk im Bereitschaftsbetrieb gehalten werden muss, wie es derzeit der Fall ist. Allein dadurch können schon erhebliche Mengen CO₂ gespart werden, ohne Berücksichtigung einer möglichen CO₂ Sequestrierung.

### Kurze Beschreibung der Zeichnung

In der Zeichnung sind herkömmliche Kraftwerke sowie zwei Ausführungsbeispiele der Erfindung dargestellt. In den Figuren sind gleiche oder einander entsprechende Elemente mit demselben Bezugszeichen versehen. Es zeigen:
- Fig.1: ein Blockdiagramm eines herkömmlichen Kraftwerkes ohne Kohlendioxidsequestrierung;
- Fig.2: ein Blockdiagramm eines herkömmlichen Kraftwerkes mit Kohlendioxidsequestrierung;
- Fig.3: ein Blockdiagramm eines ersten Ausführungsbeispiels eines erfindungsgemäßen Kraftwerkes mit Kohlendioxidsequestrierung; und
- Fig. 4: ein Blockdiagramm eines zweiten Ausführungsbeispiels eines erfindungsgemäßen Kraftwerkes mit Kohlendioxidsequestrierung.

### Beschreibung eines Ausführungsbeispiels der Erfindung

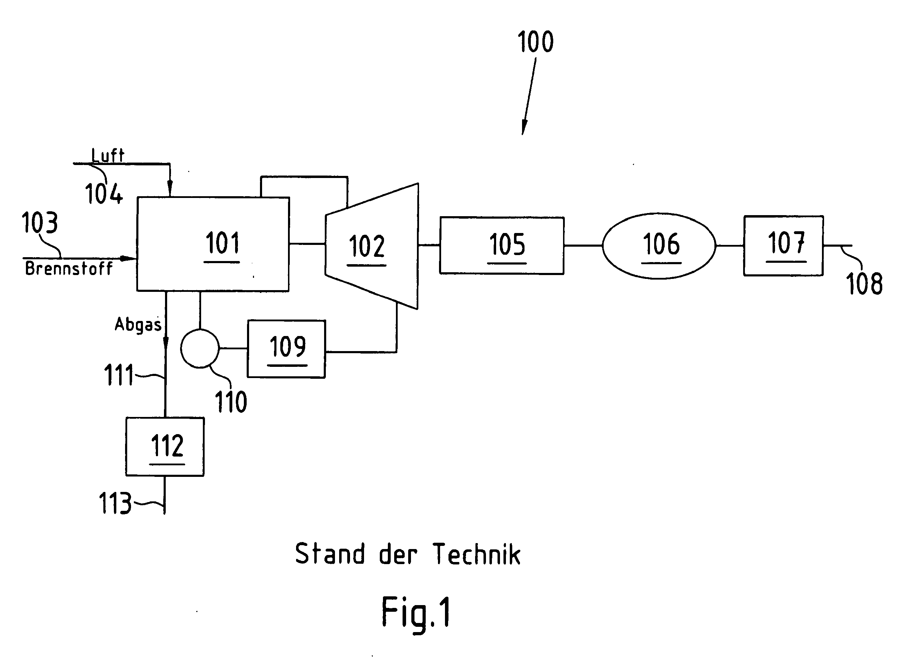

In Figur 1 ist ein schematisches Blockdiagramm eines herkömmlichen Kraftwerkes dargestellt, das zur Stromerzeugung fossile Brennstoffe verbrennt, wobei das dabei entstehende CO₂ in die Atmosphäre entlassen wird. Das Kraftwerk wird als Ganzes mit dem Bezugszeichen 100 bezeichnet. Das Kraftwerk wird mit einem fossilen Brennstoff als Primärenergiequelle versorgt. Dazu gehören z. B. Erdgas, Öl und Kohle, die bei der Elektrizitätserzeugung am häufigsten zum Einsatz kommen. Der Brennstoff wird in einem Kessel 101 verbrannt, um Hochdruckdampf zu erzeugen, der geeignet ist, um eine Turbine 102 anzutreiben, die im Folgenden als Hauptturbine bezeichnet wird. Der Brennstoff wird über eine Brennstoffleitung 103 in den Brennraum des Kessels 101 eingeblasen. Der Brennstoff verbrennt in dem Brennraum des Kessels mit Verbrennungsluft, die über eine Luftzuführung 104 zugeführt wird. Wenn als Brennstoff Kohle zum Einsatz kommt, dann wird die Kohle vor der Verbrennung in einer in Figur 1 nicht dargestellten Kohlemühle zu Staub gemahlen. In der Hauptturbine 102 wird die in dem Dampf gespeicherte Energie in mechanische Energie umgewandelt, die an eine Ausgangswelle der Hauptturbine 102 abgegeben wird. Die Ausgangswelle der Hauptturbine 102 treibt einen Generator 105 an, der die mechanische Energie in elektrische Energie umwandelt. Die von dem Generator 105 abgegebene elektrische Energie wird in ein Wechselstrommittelspannungsnetz 106 abgegeben und von dort einem Hochspannungstransformator 107 zugeführt. Der Hochspannungstransformator 107 transformiert die Mittelspannung vom Generator z. B. in Höhe von 30 Kilovolt auf eine Transportspannung von z. B. 380 Kilovolt oder 220 Kilovolt, um die Energie mit möglichst geringen Verlusten durch eine Übertragungsleitung 108 abzuführen.

In dem Kraftwerk ist weiterhin ein Kondensor 109 vorgesehen, der mit einem Kühlkreis Dampf in Wasser wandelt. Über eine Pumpe 110 wird Wasser im Kessel eingespeist. Als Beispiel für ein solches Nebenaggregat ist in Figur 1 eine Pumpe 110 dargestellt, die Speisewasser in den Kessel 101 fördert. Die Pumpe 110 wird elektrisch via Synchron- oder Asynchronmaschinen angetrieben, d. h. die Drehzahl der Pumpe ist fest mit der Netzfrequenz gekoppelt. Weitere solcher in dem Kraftwerk 100 notwendigen Nebenaggregate sind Gebläse und Kühlwasserpumpen, die der Übersichtlichkeit halber in Figur 1 nicht dargestellt sind. Die Nebenaggregate werden mithilfe der in dem Kraftwerk erzeugten elektrischen Energie mit Strom versorgt. Typischerweise verbraucht ein Kraftwerk im Betrieb 5 bis 8% der erzeugten elektrischen Energie für den eigenen Bedarf. Die Abgase des in dem Kessel 101 stattfindenden Verbrennungsprozesses werden über eine Abgasleitung 111 abgeführt. Die Abgase werden in einem elektrostatischen Filter 112 von mineralischen Partikeln und von Staub befreit und dann über einen Kamin 113 in die Atmosphäre abgeführt. Naturgemäß enthalten die Abgase aus dem Verbrennungsprozess von fossilen Energieträgern große Mengen von CO₂.

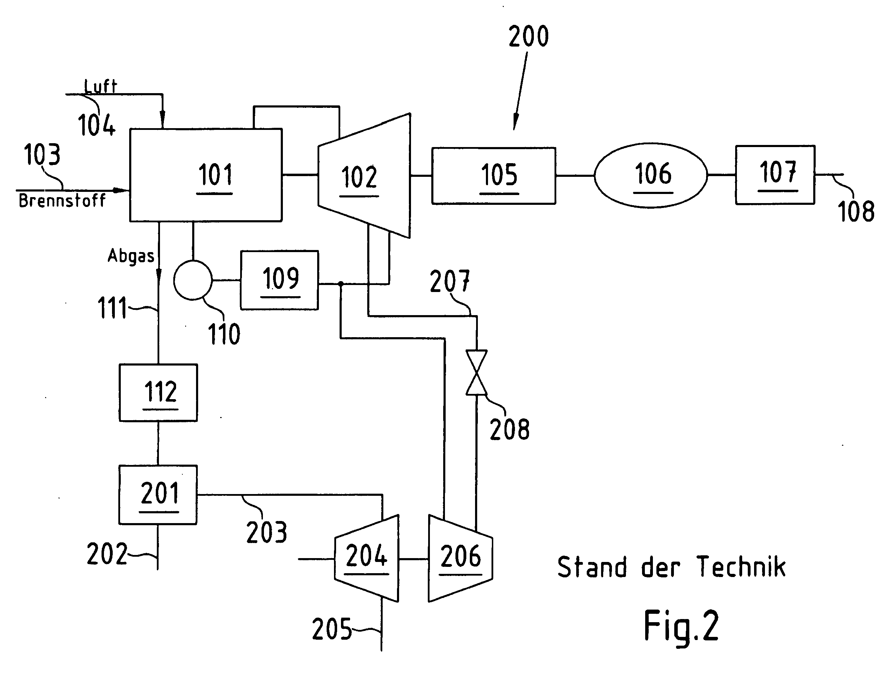

In Figur 2 ist ein schematisches Blockdiagramm eines herkömmlichen Kraftwerkes mit CO₂-Sequestrierung dargestellt. Das Kraftwerk wird als Ganzes mit dem Bezugszeichen 200 bezeichnet. Als CO₂-Sequestrierung bezeichnet man die Einlagerung des CO₂, beispielsweise in geeigneten geologischen Formationen wie aufgegebenen Salzstöcken, Erdgaslagerstätten, Kohleflözen oder Erdöllagerstätten. Die CO₂-Sequestrierung ist ein Bestandteil von Anstrengungen auf der Ebene der Europäischen Union, um den Kohlendioxidausstoß aus der Verbrennung von fossilen Brennstoffen zu vermindern. Diese Anstrengungen werden auch unter dem Begriff "CCS-Prozess" (englisch: "Carbon Dioxide Capture and Storage") bezeichnet. Das Kraftwerk 200 ist in Bezug auf die Komponenten, die der Energieerzeugung im Kraftwerk dienen, gleich aufgebaut wie das in Figur 1 dargestellte Kraftwerk 100. Der Unterschied zwischen dem Kraftwerk 200 und dem Kraftwerk 100 sind zusätzliche Baugruppen, welche der Abscheidung von CO₂ aus den Verbrennungsabgasen des Kessels 101 dienen. Nach der Abscheidung liegt das CO₂ gasförmig vor und muss noch verflüssigt werden, weil für die Sequestrierung das CO₂ in flüssiger Form vorliegen muss. Die hierfür notwendigen Bauteile werden im Folgenden kurz beschrieben.

Die Verbrennungsabgase treten aus dem elektrostatischen Filter 112 gereinigt aus und werden z. B. einem Wäscher 201 zugeführt, der als Abscheideeinrichtung für CO₂ dient. In dem Wäscher 201 wird das gasförmige CO₂ an eine CO₂-absorbierende Flüssigkeit bei einer ersten Temperatur angelagert und anschließend aus der absorbierenden Flüssigkeit bei einer höheren Temperatur wieder ausgetrieben, wonach das CO₂ in reiner Form vorliegt. Bei der absorbierenden Flüssigkeit kann es sich beispielsweise um ein Amin handeln, an welches sich Kohlendioxid bei 27° Celsius anlagert und bei 150° Celsius wieder abgegeben wird. Derartige Anlagen sind im Stand der Technik bekannt und werden deshalb nicht im Einzelnen beschrieben, weil es bei der vorliegenden Erfindung nicht darauf ankommt, auf welche Weise das CO₂-Gas abgeschieden wird. Bei Kohlekraftwerken macht das CO₂ einen Anteil von ungefähr 15% des von der Verbrennung freigesetzten Rauchgases aus. Die von den CO₂ befreiten anderen Gasanteile verlassen den Wäscher 201 durch einen Kamin 202 und werden in die Atmosphäre entlassen. Das gasförmige CO₂ wird über eine Leitung 203 einem Kompressor 204 zugeführt, wo es soweit verdichtet wird, dass es in die flüssige Phase übergeht. Der Kompressor 204 stellt somit an einer Ausgangsleitung 205 flüssiges CO₂ zur Verfügung, von wo aus es zum Beispiel über eine Pipeline oder mithilfe von Transportbehältern zur endgültigen Sequestrierung abtransportiert wird.

Bei dem in Figur 2 dargestellten Ausführungsbeispiel wird der Kompressor 204 von einer Hilfsturbine 206 angetrieben. Die Hilfsturbine 206 wird über eine Speiseleitung 207 mit Dampf versorgt, der von der Hauptturbine 102 abgezweigt wird. In der Speiseleitung 207 ist ein Drosselventil 208 angeordnet, mit welchem die Drehzahl beziehungsweise Leistung der Hilfsturbine 206 gesteuert wird. Die Hilfsturbine 206 wird ebenso wie alle anderen Aggregate des Kraftwerkes 200 von der Steuerungseinheit 109 gesteuert.

Aus heutiger Sicht ist dieser Ansatz nicht optimal, weil bei dieser Konstruktion ungefähr 12% der Leistung der Hauptturbine 102 verloren gehen. Die Gründe hierfür wurden bereits eingangs genannt. Einer der wichtigsten Gründe ist, dass alleine schon die Abzweigung des Dampfes von der Hauptturbine zu einer Reduzierung deren Effizienz führt. Bei der Steuerung über ein Drosselventil 208 treten Enthalpieverluste auf, wodurch der Wirkungsgrad weiter verschlechtert wird.

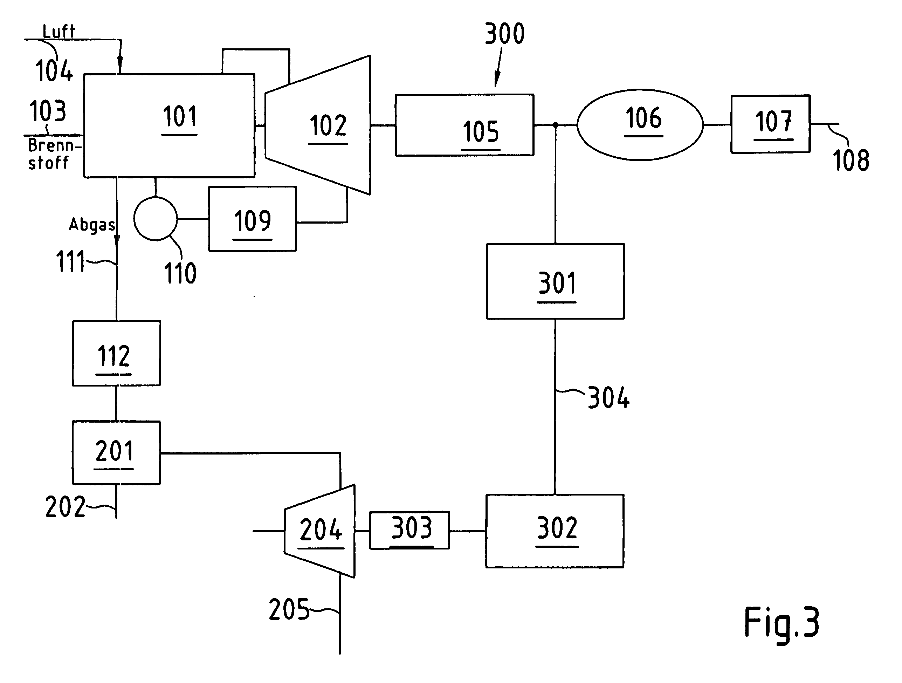

In Figur 3 ist ein schematisches Blockdiagramm eines erfindungsgemäßen Kraftwerkes mit CO₂-Sequestrierung dargestellt. Das Kraftwerk wird als Ganzes mit dem Bezugszeichen 300 bezeichnet. Das Konzept der Erfindung besteht darin, dass die Hilfsturbine 206 bei dem in Figur 2 dargestellten Kraftwerk 200, durch einen elektrischen Antrieb mit variabler Drehzahl ersetzt wird, um einen besseren Gesamtwirkungsgrad des Kraftwerkes 300 im Vergleich zu dem Kraftwerk 200 zu erzielen. Zu diesem Zweck ist ein Umrichter 301 vorgesehen, der sowohl als passiver oder als aktiver Gleichrichter ausgebildet sein kann. Ein aktiver Gleichrichter besteht tatsächlich aus einem Inverter-Schaltkreis, der im Gleichrichtermodus arbeitet. Aktive Gleichrichter sind in der Lage, die aktive und reaktive Leistung unabhängig voneinander bidirektional zu steuern und sind die heute bevorzugte Topologie bei variablen elektrischen Antrieben im Mittelspannungsbereich. Mit der von dem Inverter 302 erzeugten Wechselspannung wird eine elektrische Maschine, zum Beispiel ein Induktionsmotor 303, mit Energie versorgt. Typischerweise werden in diesem Leistungsbereich Induktionsmotoren und Synchronmaschinen verwendet. Die Erfindung ist jedoch nicht auf einen bestimmten Typ von Elektromotor beschränkt. Es kommt lediglich darauf an, dass die Leistungsabgabe der elektrischen Maschine 303 mithilfe des Inverters oder Umrichters 302 variabel steuerbar ist. Typischerweise hat die elektrische Maschine 303 eine Nennleistung von 40 Megawatt bei einer Kraftwerksleistung von 800 MW. Allgemeiner hat die elektrische Maschine 303 eine Nennleistung, die ungefähr 5% der Nennleistung des Kraftwerkes entspricht. Elektrisch angetriebene Kompressoren in diesem Leistungsbereich finden zum Beispiel in Anlagen zur Verflüssigung von Erdgas Anwendung. Derartige elektrische Antriebe sind kommerziell erhältlich. Die Umrichter 301 und 302 sind so ausgestaltet, dass beide in der Lage sind, Gleichstrom in Wechselstrom umzuwandeln und umgekehrt.

Zur Ansteuerung der elektrischen Maschine werden Leistungsumrichter benutzt. Heute werden Leistungsumrichter modular aufgebaut, um so genannte Leistungselektronikblöcke (englisch: "Power Electronic Building Blocks", PEBB) zu bilden. IGBT's (Insulated Gate Bipolar Transistor) oder GCT's (Gate Commutated Thyristors) werden in Reihen- oder Parallelschaltungen verwendet, um Spannungskonverter aufzubauen, die Leistungsgrößen über 40 Megawatt erreichen.

Es ist bekannt, beispielsweise in Umrichtern Hochleistungsschalter in Form von GTOs (Gate Turn-off Thyristors) oder GCTs sowie IGBT's einzusetzen. Diese Halbleiterbauelemente werden durch einen Gatestromimpuls eingeschaltet. Zum Ausschalten der Bauelemente wird im Falle des GTO ein Teil des Anodenstroms, im Falle des GCT sogar der gesamte Anodenstrom, über das Gate aus dem Halbleiter herausgeführt.

Im Ergebnis haben diese Spannungskonverter einen inneren Gleichspannungsbus oder ein Gleichspannungsnetzwerk 304. Ein Vorteil dieser Konzeption ist, dass durch Zusammenschaltung von standardisierten Bauteilen unterschiedliche Leistungsstufen der PEBBs kostengünstig aufgebaut werden können.

Der elektrische Antrieb für den Kompressor 204, das heißt, der Umrichter 301, der Inverter 302 und die elektrische Maschine 303 haben eine Effizienz von über 95%. Der Kompressor 204 wird von dem Inverter gesteuert, welcher die Drehzahl, beziehungsweise Leistung der elektrischen Maschine 303 steuert. Auf diese Weise wird keine Ventilsteuerung, zum Beispiel mithilfe von Drosselventilen auf Seiten des Kompressors benötigt und dadurch werden Verluste minimiert. Eine Abschätzung hat gezeigt, dass das Kompressorsystem ungefähr 6% der Gesamtleistung der von der Hauptturbine erzeugten elektrischen Leistung verbraucht. Der Gleichspannungsbus 304 des elektrischen Antriebes wird mit einem netzseitigen 3-Phasen elektrischen Gleichrichter mit elektrischer Energie versorgt, der bei dem in Figur 3 dargestellten Ausführungsbeispiel entsprechend der aktiven Leistung des Kompressorantriebes dimensioniert ist.

Darüber hinaus ist es bekannt, dass der Umrichter 301 eine sehr schnelle VAR-Steuerung zur Verfügung stellen kann, um die Blindleistung sehr schnell anpassen zu können. Dies gestattet es dem Erreger des Generators nämlich, dessen Feldwicklung für langsamere Änderungen auszugestalten, was dessen Kosten reduziert.

Der erfindungsgemäße elektrische Antrieb kann auf einfache Weise in bestehenden Kraftwerken nachgerüstet werden. Nach einer Abschätzung wird die Gesamteffizienz des Kraftwerkes durch die Abscheidung des Kohlendioxids aus den Abgasen um ungefähr 6% der Ausgangsnennleistung vermindert.

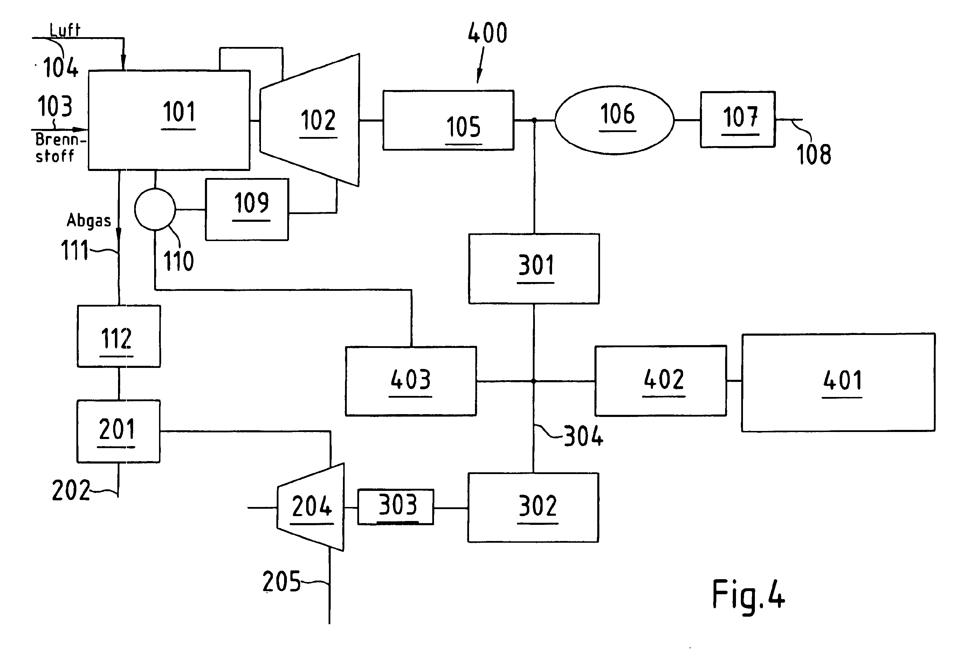

In Figur 4 ist ein schematisches Blockdiagramm eines zweiten Ausführungsbeispiels eines erfindungsgemäßen Kraftwerkes mit CO₂-Sequestration dargestellt. Das Kraftwerk wird als Ganzes mit dem Bezugszeichen 400 bezeichnet. Bei diesem Ausführungsbeispiel ist an den Gleichspannungsbus 304 ein elektrischer Energiespeicher 401 angeschlossen. Bei dem Energiespeicher kann es sich zum Beispiel um Bleiakkumulatoren handeln, die relativ kostengünstig sind. Auch Natriumschwefelbatterien, die langlebig sind, werden heutzutage wirtschaftlich eingesetzt. Der Energiespeicher 401 ist mittels einer Gleichspannungswandlers (DC/DC Wandler) 402 an den Gleichspannungsbus 304 angeschlossen. In diesem Fall kann der netzseitige Umrichter 301 im Inverterbetrieb dem so ausgerüsteten Kraftwerk 400 Schwarzstartfähigkeiten verleihen.

Unter Schwarzstart versteht der Fachmann, dass ein Kraftwerk in der Lage ist, aus dem Stillstand heraus anzufahren, ohne hierfür Energie aus einem Stromversorgungsnetz zu benötigen. Alle Nebenaggregate des Kraftwerkes 400 können über den Gleichspannungsbus 304 versorgt werden, der sich wie eine unterbrechungsfreie Stromversorgung verhält (Englisch: Uninterruptable Power Supply, UPS). Somit ist das erfindungsgemäße Kraftwerk 400 zum Inselbetrieb geeignet, weil eine Spannungsteuerung (VAR-Control) möglich ist, indem der aktive Gleichrichter 301 für diesen Zweck eingesetzt wird.

Darüber hinaus ermöglicht die Energiespeicherung in Batterien in dem Energiespeicher 401 eine sehr rasche Reaktion auf eine erhöhte Leistungsanforderung im Netz. Die Reaktion kann sehr viel schneller erfolgen als es beispielsweise bei einem Pumpspeicherkraftwerk möglich ist.

Es ist vorgesehen, dass der Energiespeicher 401 eine Leistung von mindestens 5% der Nennleistung des Kraftwerkes während einer Zeitdauer von 8 Stunden abgeben kann. Bei einem 800 Megawatt Kraftwerk entsprechen 5% der Nennleistung 40 Megawatt. Bei einer größeren Anzahl derartiger Energiespeicher, verteilt über eine größere Anzahl von Kraftwerken, ist es dann auch möglich, Kraftwerke, die lediglich in Bereitschaft stehen, vollständig abzuschalten und einen zeitweiligen erhöhten Energiebedarf allein aus den elektrischen Energiespeichern 401 zu decken. Die Energiespeicher 401 können dezentral jeweils bei einzelnen Kraftwerken aufgestellt sein oder zentral in einem kraftwerksübergreifenden Netz.

Es dauert ungefähr eine Stunde, um ein stillstehendes Kraftwerk mit kaltem Kessel auf seine Nennleistung hochzufahren. Mithilfe der elektrischen Energiespeicher 401 ist es ohne weiteres möglich, diese Zeitdauer zu überbrücken. Allein dieser Umstand, dass ein Kraftwerk vollständig abgeschaltet wird und nicht im Bereitschaftsbetrieb weiterläuft, führt bereits ohne CO₂-Sequestrierung gegenüber der heutigen Technologie zu einer erheblichen Einsparung von CO₂-Emissionen bei der Stromerzeugung.

Ein weiteres Merkmal der Erfindung ist die Tatsache, dass die Primärsteuerungsfunktion des Generators, die von der Dimensionierung des Netzinverters abhängt, zu dem netzseitigen Inverter zu verschieben. Somit ist es möglich, den Generator 105 vollständig abzuschalten und damit erhebliche Bereitschaftsverluste zu vermeiden. Von dem gemeinsamen Mittelspannungs - Gleichspannungsbus 304 können andere Inverterversorgungslasten in dem gesamten Kraftwerk 400 versorgt werden. Dazu gehören alle Pumpen und Gebläse. Zu diesem Zweck ist ein weiterer Inverter 403 vorgesehen, der an dem Gleichspannungsbus 304 angeschlossen ist. Dieser Aufbau des Kraftwerkes 400 ermöglicht es, dass im Teillastbetrieb und während des Anfahrens des Kraftwerkes das Kraftwerk flexibler gesteuert werden kann, welches die Effizienz und die Dynamik in dem Sinne verbessert, als ein schnelleres Anfahren erzielt wird.

Durch die Verwendung von Mittelspannungs-Gleichspannungskabeln, welche in Figur 4 nicht dargestellt sind, ist es möglich, in der Nähe regenerative Stromerzeuger wie zum Beispiel Windgeneratoren direkt an das Gleichspannungsnetz 304 des Kraftwerkes 400 anzuschließen. Durch Verwendung der Batterien 401 des Kraftwerkes 400 können Schwankungen in der Windkraft kompensiert werden und auf diese Weise kann eine konstante Leistungsabgabe an das Hochspannungsnetz 108 erzielt werden. Hierfür ist der netzseitige Inverter oder aktive Gleichrichter 301 für die Nennleistung der Windfarm und die erforderliche Blindleistungskompensation zu dimensionieren.

Für Windfarmen ist der Einsatz von Gleichstromnetzen zum Sammeln und zur Weiterleitung der von einer Vielzahl von Windturbinen erzeugten elektrischen Energie bereits in zahlreichen Publikationen vorgeschlagen worden, wie zum Beispiel von C. Meyer und R. De Donker in "Design of a three-phase series resonant converter for offshore dc grids" in 42nd Annual Meeting Industry Applications Conference, Conference Record of the 2007 IEEE, 2007, Seiten 216 bis 223.

Da der netzseitige Inverter eine hohe Bandbreite von mehreren Kilohertz hat, können harmonische und subharmonische Schwingungen ohne zusätzliche Filterschaltungen kompensiert werden, indem Leistung aus den Batterien gezogen wird.

Die Erfindung ist zwar im Zusammenhang mit einem Kraftwerk beschrieben worden, bei dem fossile Brennstoffe in einem Kessel 101 verbrannt werden, um Dampf für eine Dampfturbine zu erzeugen. Dennoch ist die Erfindung grundsätzlich auch auf Kraftwerke anwendbar, bei denen Erdgas in Gasturbinen verbrannt wird.

### Bezugszeichenliste:

| | |
|---|---|
| 100 | Kraftwerk |
| 101 | Kessel |
| 102 | Hauptturbine |
| 103 | Brennstoffleitung |
| 104 | Luftzuführung |
| 105 | Generator |
| 106 | Wechselstrommittelspannungsnetz |
| 107 | Hochspannungstransformator |
| 108 | Übertragungsleitung |
| 109 | Kondensor |
| 110 | Pumpe |
| 111 | Abgasleitung |
| 112 | elektrostatischer Filter |
| 113 | Kamin |
| 200 | Kraftwerk |
| 201 | Wäscher |
| 202 | Schornstein |
| 203 | Leitung |
| 204 | Kompressor |
| 205 | Ausgangsleitung |
| 206 | Hilfsturbine |
| 207 | Speiseleitung |
| 208 | Drosselventil |
| 300 | Kraftwerk |
| 301 | Umrichter |
| 302 | Umrichter |
| 303 | elektrische Maschine |
| 304 | Gleichspannungsbus |
| 400 | Kraftwerk |
| 401 | Energiespeicher |
| 402 | Gleichspannungswandler |
| 403 | Inverter |

## Patentansprüche

1. Kraftwerk, bei dem ein fossiler Brennstoff zur Stromerzeugung eingesetzt wird, wobei eine Turbine (102) einen Generator (105) antreibt, der elektrischen Strom erzeugt, wobei das Kraftwerk eine Abscheideeinrichtung (201) aufweist, mit welcher Kohlendioxid aus dem Abgas des Kraftwerkes abgeschieden wird, und wobei das Kraftwerk weiterhin einen Kompressor (204) aufweist, mit welchem das abgeschiedene Kohlendioxid verflüssigt wird, der Kompressor (204) mit einem elektrischen Antrieb (303) gekoppelt ist, **dadurch gekennzeichnet, dass** der Generator (105) den erzeugten elektrischen Strom an ein Wechselspannung Mittelspannungsnetz (106) abgibt, dass ein Umrichter (301) an das Wechselspannung Mittelspannungsnetz (106) angeschlossen ist, um Gleichstrom zu erzeugen, der von einem Inverter (302) in eine Wechselspannung umgewandelt wird, um den elektrischen Antrieb (303) des Kompressors (204) mit Energie zu versorgen und der elektrische Antrieb(303) eine Nennleistung hat, die ungefähr 5% der Nennleistung des Kraftwerkes entspricht.

2. Kraftwerk nach Anspruch 1, **dadurch gekennzeichnet, dass** die Turbine eine Dampfturbine ist, und dass das Kraftwerk einen Kessel (101) umfasst, in welchem der fossile Brennstoff verbrannt wird, um Dampf für die Turbine (102) zu erzeugen, die den Generator antreibt.

3. Kraftwerk nach einem oder mehreren der vorstehenden Ansprüche, **dadurch gekennzeichnet, dass** der elektrische Antrieb (303) des Kompressors (204) zur Versorgung mit elektrischer Energie an das Wechselspannung Mittelspannungsnetz (106) angeschlossen ist.

4. Kraftwerk nach Anspruch 1, **dadurch gekennzeichnet, dass** der elektrische Antrieb (303) des Kompressors (204) variable Drehzahlen zulässt.

5. Kraftwerk nach Anspruch 1, **dadurch gekennzeichnet, dass** der Umrichter (301) ein aktiver Gleichrichter ist.

6. Kraftwerk nach Anspruch 1, **dadurch gekennzeichnet, dass** der Umrichter (301) und der Inverter (302) über ein Gleichstrom Mittelspannungsnetz (304) miteinander verbunden sind.

7. Kraftwerk nach Anspruch 5, **dadurch gekennzeichnet, dass** an das Gleichstrom Mittelspannungsnetz (304) ein weiterer Inverter (403) angeschlossen ist, der elektrische Nebenaggregate (110) des Kraftwerkes mit Energie versorgt.

8. Kraftwerk nach Anspruch 7, **dadurch gekennzeichnet, dass** die Nebenaggregate (110) elektrische Antriebe mit variabler Drehzahl aufweisen.

9. Kraftwerk nach einem oder mehreren der vorstehenden Ansprüche, **dadurch gekennzeichnet, dass** das Kraftwerk mit einem elektrischen Energiespeicher (401) verbunden ist.

10. Kraftwerk nach Anspruch 9, **dadurch gekennzeichnet, dass** der Energiespeicher (401) aus einer elektrischen Batterie oder aus einer Mehrzahl von miteinander verbundenen elektrischen Batterien aufgebaut ist.

11. Kraftwerk nach Anspruch 10, **dadurch gekennzeichnet, dass** der Energiespeicher (401) außerhalb des Kraftwerkes aufgestellt ist.

12. Das Kraftwerk nach Anspruch11, **dadurch gekennzeichnet, dass** ein einzelner Energiespeicher (401) als Energiespeicher für mehrere Kraftwerke dient.

13. Kraftwerk nach Anspruch 10, **dadurch gekennzeichnet, dass** der Energiespeicher (401) an das Gleichstrom Mittelspannungsnetz (304) des Kraftwerkes angeschlossen ist.

14. Kraftwerk nach Anspruch 9, **dadurch gekennzeichnet, dass** der Energiespeicher (401) über einen Gleichspannungswandler (402) an das Gleichstrom Mittelspannungsnetz (304) des Kraftwerkes angeschlossen ist.

15. Kraftwerk nach einem oder mehreren der vorstehenden Ansprüche, **dadurch gekennzeichnet, dass** eine Windkraftanlage an das Gleichstrom Mittelspannungsnetz (304) angeschlossen ist.

16. Energieversorgungssystem aus einer Anzahl von Kraftwerken nach einem oder mehreren der vorstehenden Ansprüche, die in einem Stromversorgungsnetz miteinander verbunden sind, wobei mehrere der Kraftwerke einen Energiespeicher (401) aufweisen.

## Claims

1. A power plant in which a fossil fuel is used to generate power, whereby a turbine (102) drives a generator (105) generates electricity, whereby the power plant has a separator (201) with which carbon dioxide is separated out of the exhaust gas of the power plant, and whereby the power plant also has a compressor (204) with which the separated carbon dioxide is liquefied, the compressor (204) is coupled to an electric drive (303), **characterized in that** the generator (105) supplies the generated electricity to an alternating-voltage medium-voltage network (106), **in that** a converter (301) is connected to the alternating-voltage medium-voltage network (106) in order to generate direct current that is converted by an inverter (302) into an alternating voltage for purposes of supplying the electric drive (303) of the compressor (204) with energy, and the electric machine (303) has a rated output that is approximately 5% of the rated output of the power plant.

2. The power plant according to Claim 1, **characterized in that** the turbine is a steam turbine, and **in that** the power plant comprises a boiler (101) in which fossil fuel is burned in order to generate steam for the turbine (102) that drives the generator.

3. The power plant according to one or more of the preceding claims, **characterized in that** the electric drive (303) of the compressor (204) is connected to the alternating-voltage medium-voltage network (106) in order to obtain its electric power.

4. The power plant according to claim 1, **characterized in that** the electric drive (303) of the compressor (204) allows variable speeds.

5. The power plant according to Claim 1, **characterized in that** the converter (301) is an active rectifier.

6. The power plant according to Claim 1, **characterized in that** the converter (301) and the inverter (302) are connected to each other via a direct-current medium-voltage network (304).

7. The power plant according to Claim 5, **characterized in that** another inverter (403) is connected to the direct-current medium-voltage network (304), and it can supply power to secondary electric aggregates (110) of the power plant.

8. The power plant according to Claim 7, **characterized in that** the secondary aggregates (110) have electric drives with variable speeds.

9. The power plant according to one or more of the preceding claims, **characterized in that** the power plant is connected to an electric energy storage device (401).

10. The power plant according to Claim 9, **characterized in that** the energy storage device (401) consists of an electric battery or of a plurality of electric batteries that are connected to each other.

11. The power plant according to Claim 10, **characterized in that** the energy storage device (401) is set up outside of the power plant.

12. The power plant according to Claim 11, **characterized in that** a single energy storage device (401) serves as the energy storage device for several power plants.

13. The power plant according to Claim 10, **characterized in that** the energy storage device (401) is connected to the direct-current medium-voltage network (304) of the power plant.

14. The power plant according to Claim 9, **characterized in that** the energy storage device (401) is connected via a direct-voltage converter (402) to the direct-current medium-voltage network (304) of the power plant.

15. The power plant according to one or more of the preceding claims, **characterized in that** a wind power plant is connected to the direct-current medium-voltage network (304).

16. An energy supply system comprising several power plants according to one or more of the preceding claims that are connected to each other via a power supply grid, whereby several of the power plants have an energy storage device (401).

## Revendications

1. Centrale électrique dans laquelle on utilise un combustible fossile pour la production d'électricité, une turbine (102) entraînant un générateur (105) qui produit du courant électrique, la centrale électrique comportant un dispositif de séparation (201) pour séparer le dioxyde de carbone du gaz d'échappement de la centrale électrique et la centrale électrique comportant en outre un compresseur (204) permettant de liquéfier le dioxyde de carbone séparé, le compresseur (204) étant couplé à un entraînement électrique (303), **caractérisée en ce que** le générateur (105) délivre le courant électrique produit à un réseau moyenne tension alternative (106), **en ce qu'**un convertisseur (301) est raccordé au réseau moyenne tension alternative (106) pour produire du courant continu qui est converti par un ondulateur (302) en une tension alternative pour alimenter l'entraînement électrique (303) du compresseur (204) en énergie et **en ce que** l'entraînement électrique (303) a une puissance nominale qui correspond à environ 5 % de la puissance nominale de la centrale électrique.

2. Centrale électrique selon la revendication 1, **caractérisée en ce que** la turbine est une turbine à vapeur et **en ce que** la centrale électrique comprend une chaudière (101) dans laquelle le combustible fossile est brûlé pour produire de la vapeur pour la turbine (102) qui entraîne le générateur.

3. Centrale électrique selon l'une ou plusieurs des revendications précédentes, **caractérisée en ce que** l'entraînement électrique (303) du compresseur (204) est raccordé au réseau moyenne tension alternative (106) aux fins de l'approvisionnement en énergie électrique.

4. Centrale électrique selon la revendication 1, **caractérisée en ce que** l'entraînement électrique (303) du compresseur (204) autorise des régimes variables.

5. Centrale électrique selon la revendication 1, **caractérisée en ce que** le convertisseur (301) est un redresseur actif.

6. Centrale électrique selon la revendication 1, **caractérisée en ce que** le convertisseur (301) et le ondulateur (302) sont reliés entre eux via un réseau moyenne tension à courant continu (304).

7. Centrale électrique selon la revendication 5, **caractérisée en ce qu'**est raccordé au réseau moyenne tension à courant continu (304) un autre ondulateur (403) qui alimente en énergie les groupes électriques auxiliaires (110) de la centrale électrique.

8. Centrale électrique selon la revendication 7, **caractérisée en ce que** les groupes auxiliaires (110) comportent des entraînements électriques à régime variable.

9. Centrale électrique selon l'une ou plusieurs des revendications précédentes, **caractérisée en ce que** la centrale électrique est reliée à un accumulateur d'énergie électrique (401).

10. Centrale électrique selon la revendication 9, **caractérisée en ce que** l'accumulateur d'énergie (401) est réalisé à partir d'une batterie électrique ou d'une pluralité de batteries électriques reliées entre elles.

11. Centrale électrique selon la revendication 10, **caractérisée en ce que** l'accumulateur d'énergie (401) est installé en dehors de la centrale électrique.

12. Centrale électrique selon la revendication 11, **caractérisée en ce qu'**un accumulateur d'énergie individuel (401) sert d'accumulateur d'énergie pour plusieurs centrales électriques.

13. Centrale électrique selon la revendication 10, **caractérisée en ce que** l'accumulateur d'énergie (401) est raccordé au réseau moyenne tension à courant continu (304) de la centrale électrique.

14. Centrale électrique selon la revendication 9, **caractérisée en ce que** l'accumulateur d'énergie (401) est raccordé au réseau moyenne tension à courant continu (304) de la centrale électrique via un convertisseur de tension continue (402).

15. Centrale électrique selon l'une ou plusieurs des revendications précédentes, **caractérisée en ce qu'**une installation éolienne est raccordée au réseau moyenne tension à courant continu (304).

16. Système d'alimentation en énergie composé d'un nombre de centrales électriques selon l'une ou plusieurs des revendications précédentes, lesquelles sont reliées entre elles dans un réseau d'alimentation électrique, plusieurs des centrales électriques comportant un accumulateur d'énergie (401).
